# EUROPEAN PATENT APPLICATION

(11) **EP 4 697 542 A1**
(43) Date of publication of application: **18.02.2026**
(21) Application number: 24792023.4
(22) Date of filing: 17.04.2024
(51) Int. Cl.: H02J 3/28

(54) **ENERGY STORAGE DEVICE, ENERGY STORAGE SYSTEM, AND REDUNDANCY CONTROL METHOD**

(30) Priority: 17.04.2023 CN 202310410524
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LU, Yanhua, Shanghai 200241 (CN); YU, Dongxu, Shanghai 200241 (CN)
(74) Representative: Gong, Jinping
(86) International application number: PCT/CN2024/088219
(87) International publication number: WO 2024/217438

(57) **Abstract**

The present application is applicable to the field of energy storage technology and provides an energy storage apparatus, an energy storage system, and a redundant control method, where the energy storage apparatus includes a power module and a battery module; the power module includes a first switch and a first controller configured to control the first switch; the battery module includes a second switch and a second controller configured to control the second switch; the first controller is connected to both the first switch and the second controller, and the second controller is connected to the second switch. The energy storage apparatus in embodiments of the present application effectively improves communication reliability of the energy storage system, thereby enhancing the operational reliability and stability of the energy storage system.

## Description

This application claims priority to Chinese Patent Application No. 202310410524.7, filed with the Patent Office of the China National Intellectual Property Administration on April 17, 2023, and entitled "ENERGY STORAGE APPARATUS, ENERGY STORAGE SYSTEM, AND REDUNDANT CONTROL METHOD," which is incorporated herein by reference in its entirety.

### TECHNICAL FIELD

The present application relates to the field of energy storage, and particularly to an energy storage apparatus, an energy storage system, and a redundant control method.

### BACKGROUND

Energy storage refers to a process of storing energy through a medium or equipment and releasing it when needed. Existing cascaded energy storage systems consist of multiple energy storage apparatuses connected in series. When a fault occurs in an energy storage apparatus, a power module of the energy storage apparatus needs to be short-circuited, and a battery module in the energy storage apparatus needs to be disconnected to ensure normal operation of the energy storage system. However, if the power module of the faulty energy storage apparatus cannot be short-circuited or the battery module cannot be disconnected, the fault may escalate, leading to a shutdown of the energy storage system. The reliability and stability of existing energy storage systems are relatively low

### TECHNICAL PROBLEM

The present application provides an energy storage apparatus, an energy storage system, and a redundant control method, which effectively enhance the operational stability and reliability of the energy storage system.

### TECHNICAL SOLUTION

The present application provides an energy storage apparatus, an energy storage system, and a redundant control method, which effectively enhance the operational stability and reliability of the energy storage system.

To achieve the above objectives, the present application adopts the following technical solutions:

According to a first aspect, an energy storage apparatus is provided, including a power module and a battery module; where
the power module includes a first switch and a first controller configured to control the first switch; and
the battery module includes a second switch and a second controller configured to control the second switch; where
the first controller is connected to both the first switch and the second controller, and the second controller is connected to the second switch.

In an embodiment of the present application, the first controller is connected to the second controller, enabling the first controller to acquire a state of the second switch detected by the second controller and control the second switch, and enabling the second controller to acquire a state of the first switch detected by the first controller and control the first switch, thereby achieving redundant control of the first switch and the second switch by the first controller and the second controller, effectively improving communication reliability of the energy storage system, and thus enhancing the operational reliability and stability of the energy storage system.

In a possible implementation of the first aspect, the first controller is further connected to the second switch.

In an embodiment of the present application, the first controller can directly acquire the state of the second switch and directly control the second switch without relying on the second controller to acquire the state of the second switch. In cases where the second controller fails or the connection between the second controller and the second switch is interrupted, the first controller can acquire the state of the second switch and control the second switch, thereby improving communication reliability of the energy storage system.

In a possible implementation of the first aspect, the first controller is connected to both the first switch and the second switch via multi-channel communication routes.

Compared to single-channel communication, multi-channel communication offers higher communication reliability.

In a possible implementation of the first aspect, the second controller is further connected to the first switch.

In an embodiment of the present application, the second controller can directly acquire the state of the first switch and directly control the first switch without relying on the first controller to acquire the state of the first switch. In cases where the first controller fails or the connection between the first controller and the first switch is interrupted, the second controller can acquire the state of the first switch and control the first switch, thereby improving communication reliability of the energy storage system.

In a possible implementation of the first aspect, the second controller is connected to both the first switch and the second switch via multi-channel communication routes.

Compared to single-channel communication, multi-channel communication offers higher communication reliability.

In a possible implementation of the first aspect, the multi-channel communication route is a dual-channel optical fiber.

Using dual-channel optical fibers as transmission routes between the controller and the switches can enhance communication reliability and stability while reducing communication costs.

According to a second aspect, an energy storage system is provided, including a third controller and at least one energy storage apparatus as described in any one of the first aspect; where
the third controller is connected to the first controller in the energy storage apparatus.

The energy storage system in an embodiment of the present application achieves redundant control of the first switch and the second switch by the first controller and the second controller, effectively improving communication reliability of the energy storage system, and thus enhancing the operational reliability and stability of the energy storage system.

In a possible implementation of the second aspect, the third controller is further connected to the second controller in the energy storage apparatus.

In an embodiment of the present application, the second controller can not only report switch states to the third controller via the first controller but also directly report switch states to the third controller. In cases of a communication failure between the first controller and the third controller or between the first controller and the second controller, the third controller can still acquire switch information via the second controller and control the switch to close/open via the second controller; in cases of a communication failure between the second controller and the third controller or between the first controller and the second controller, the third controller can still acquire switch information via the first controller and control the switch to close/open via the first controller. Through redundant control of the first controller and the second controller by the third controller, the success rate of communication can be further improved, thereby further enhancing the operational reliability and stability of the energy storage system.

In a possible implementation of the second aspect, the energy storage system further includes a background management system; where the background management system is connected to the third controller.

Managing the energy storage system by the background management system facilitates ensuring reliable operation of the energy storage system and improving management efficiency.

In a possible implementation of the second aspect, the background management system is connected to the first controller in the energy storage apparatus or to the second controller in the energy storage apparatus.

In an embodiment of the present application, through redundant control of the first controller and the second controller in each energy storage apparatus by the background management system, the success rate of communication can be further improved, thereby further enhancing the operational reliability and stability of the energy storage system.

In a possible implementation of the second aspect, the first controllers in any two energy storage apparatuses in the energy storage system are connected.

Through redundant control between the energy storage apparatuses, the success rate of communication can be further improved, thereby further enhancing the operational reliability and stability of the energy storage system.

According to a third aspect, a redundant control method is provided, applied to the energy storage system as described in any one of the second aspect, the method including:
acquiring a first switch signal of a target switch detected by the first controller;
acquiring a second switch signal of the target switch detected by the second controller;
determining a switch state of the target switch based on the first switch signal and the second switch signal; and
determining a control instruction for controlling the target switch based on the switch state of the target switch.

In the redundant control method provided in an embodiment of the present application, the first switch signal of the target switch detected by the first controller and the second switch signal of the target switch detected by the second controller serve as redundant information to each other, and the switch state of the target switch is determined using the first switch signal and the second switch signal. Through the above method, in cases of a communication failure of the first controller or the second controller, the final switch state can be determined based on the redundant information, effectively improving the reliability of the detection results, thereby enhancing the operational reliability and stability of the energy storage system.

In a possible implementation of the third aspect, before the determining a switch state of the target switch based on the first switch signal and the second switch signal, the method further includes:
in a case that the first switch signal and/or the second switch signal is abnormal, determining the switch state of the target switch as a preset state; and
in a case that both the first switch signal and the second switch signal are normal, performing the step of determining a switch state of the target switch based on the first switch signal and the second switch signal.

In a possible implementation of the third aspect, the determining the switch state of the target switch as a preset state includes:
in a case that the target switch is the first switch, determining the switch state of the target switch as an open state; and
in a case that the target switch is the second switch, determining the switch state of the target switch as a closed state.

In the above implementation, anomaly detection is first performed on the first switch signal and the second switch signal, and the switch state of the target switch is determined based on the anomaly detection results of the two; in a case that both the first switch signal and the second switch signal are normal, the first switch signal and the second switch signal are identical information, and either can be determined as the switch state of the target switch; in a case that the first switch signal and/or the second switch signal is abnormal, the state of different switches is determined according to different preset settings. Through the above method, whether the first switch signal and the second switch signal are normal or not, a normal switch state can be detected, improving detection efficiency and reliability.

In a possible implementation of the third aspect, the determining a switch state of the target switch based on the first switch signal and the second switch signal includes:
performing a logical calculation based on the first switch signal and the second switch signal to obtain a calculation result; and
determining the switch state of the target switch based on the calculation result.

In a possible implementation of the third aspect, the performing a logical calculation based on the first switch signal and the second switch signal to obtain a calculation result includes:
in a case that the multi-channel communication route is a dual-channel optical fiber, performing an AND operation on two first signal values included in the first switch signal to obtain a first logical signal;
performing an AND operation on two second signal values included in the second switch signal to obtain a second logical signal; and
performing an OR operation on the first logical signal and the second logical signal to obtain the calculation result.

In an embodiment of the present application, through simple AND and OR operations on the first switch signal and the second switch signal, the switch state of the target switch can be determined, greatly improving the efficiency of determining the switch state of the target switch, facilitating timely control during system failures.

In a possible implementation of the third aspect, the performing an AND operation on two first signal values included in the first switch signal to obtain a first logical signal includes:
performing an AND operation on a first first signal value and an inverted value of a second first signal value to obtain a first calculated value in the first logical signal; and
performing an AND operation on an inverted value of the first first signal value and the second first signal value to obtain a second calculated value in the first logical signal;
the performing an AND operation on two second signal values included in the second switch signal to obtain a second logical signal includes:
   performing an AND operation on a first second signal value and an inverted value of a second second signal value to obtain a third calculated value in the second logical signal; and
   performing an AND operation on an inverted value of the first second signal value and the second second signal value to obtain a fourth calculated value in the second logical signal;
   the performing an OR operation on the first logical signal and the second logical signal to obtain the calculation result includes:
      performing an OR operation on the first calculated value and the third calculated value to obtain a fifth calculated value in the calculation result; and
      performing an OR operation on the second calculated value and the fourth calculated value to obtain a sixth calculated value in the calculation result; and
      the performing an OR operation on the first logical signal and the second logical signal to obtain the calculation result includes:
         determining the switch state of the target switch based on the fifth calculated value and the sixth calculated value.

In an embodiment of the present application, based on the first calculated value, the second calculated value, the third calculated value, and the fourth calculated value, it can be determined whether the dual-channel optical fibers are faulty, equivalent to performing anomaly detection on the first switch signal and the second switch signal, enabling detection of the faulty communication line and thereby determining the normal switch state.

In a possible implementation of the third aspect, the determining the switch state of the target switch based on the fifth calculated value and the sixth calculated value includes:
performing a calculation based on the fifth calculated value and the sixth calculated value using a preset trigger to obtain the switch state of the target switch.

In a possible implementation of the third aspect, the performing a calculation based on the fifth calculated value and the sixth calculated value using a preset trigger to obtain the switch state of the target switch includes:
performing delay processing on both the fifth calculated value and the sixth calculated value; and
performing a calculation based on the delay-processed fifth calculated value and the delay-processed sixth calculated value using the preset trigger to obtain the switch state of the target switch.

By adding delay processing, it can be ensured that the fifth calculated value and the sixth calculated value are synchronously input to the RS trigger, effectively avoiding the issue of asynchronous input times of the fifth calculated value and the sixth calculated value to the RS trigger, thereby effectively improving the detection reliability of the third state information.

In a possible implementation of the third aspect, the preset trigger is an RS trigger.

### BRIEF DESCRIPTION OF DRAWINGS

FIG. 1 is a schematic diagram of a structure of an energy storage apparatus provided in an embodiment of the present application;
FIG. 2 is a schematic diagram of a structure of an energy storage apparatus provided in another embodiment of the present application;
FIG. 3 is a schematic diagram of a dual-channel optical fiber provided in an embodiment of the present application;
FIG. 4 is a schematic diagram of an energy storage system provided in an embodiment of the present application;
FIG. 5 is a schematic diagram of an energy storage system provided in another embodiment of the present application;
FIG. 6 is a flowchart schematic diagram of a redundant control method provided in an embodiment of the present application;
FIG. 7 is a schematic diagram of a logic circuit provided in an embodiment of the present application;
FIG. 8 is a schematic diagram of a logic circuit provided in another embodiment of the present application;
FIG. 9 is a schematic diagram of an RS trigger provided in an embodiment of the present application;
FIG. 10 is a schematic diagram of a logic circuit provided in another embodiment of the present application; and
FIGs. 11-16 are schematic diagrams of structures of energy storage apparatuses provided in another embodiment of the present application.

### DESCRIPTION OF EMBODIMENTS

In the following description, for the purpose of illustration rather than limitation, specific details such as particular system structures and techniques are provided to thoroughly understand the embodiments of the present application. However, it should be clear to those skilled in the art that the present application can also be implemented in other embodiments without these specific details. In other cases, detailed descriptions of well-known systems, devices, circuits, and methods are omitted to avoid unnecessary details obstructing the description of the present application.

It should be understood that, when used in the specification and the appended claims of the present application, the term "include" indicates the presence of described features, entities, steps, operations, elements, and/or components, but does not exclude the presence or addition of one or more other features, entities, steps, operations, elements, components, and/or combinations thereof.

It should also be understood that the term "and/or" used in the specification and the appended claims of the present application refers to any and all possible combinations of one or more of the associated listed items and includes these combinations.

As used in the specification and the appended claims of the present application, the term "if" may be interpreted contextually as "when" or "once" or "in response to determining" or "in response to detecting." Similarly, the phrases "if determined" or "if [described condition or event] is detected" may be interpreted contextually to mean "once determined" or "in response to determining" or "once [described condition or event] is detected" or "in response to detecting [described condition or event]".

Furthermore, in the description of the specification and the appended claims of the present application, the terms "first," "second," "third," and the like are only used to distinguish descriptions and should not be understood as indicating or implying relative importance.

Reference to "an embodiment" or "some embodiments" described in the specification of the present application means that a specific feature, structure, or characteristic described in connection with the embodiment is included in one or more embodiments of the present application. Therefore, expressions such as "in an embodiment," "in some embodiments," "in some other embodiments," and "in some different embodiments" appearing in different places in this specification do not necessarily refer to the same embodiment, but mean "one or more but not all embodiments," unless otherwise specified.

Energy storage refers to a process of storing energy through a medium or equipment and releasing it when needed. Existing cascaded energy storage systems consist of multiple energy storage apparatuses connected in series. When a fault occurs in an energy storage apparatus, a power module of the energy storage apparatus needs to be short-circuited, and a battery module in the energy storage apparatus needs to be disconnected to ensure normal operation of the energy storage system. However, if the power module of the faulty energy storage apparatus cannot be short-circuited or the battery module cannot be disconnected, the fault may escalate, leading to a shutdown of the energy storage system. The reliability and stability of existing energy storage systems are relatively low.

To address the above issues, embodiments of the present application provide an energy storage apparatus, an energy storage system, and a redundant control method. In embodiments of the present application, a first controller and a second controller of each energy storage apparatus can perform redundant control of a first switch and a second switch, effectively improving communication reliability of the energy storage system, thereby enhancing the operational reliability and stability of the energy storage system.

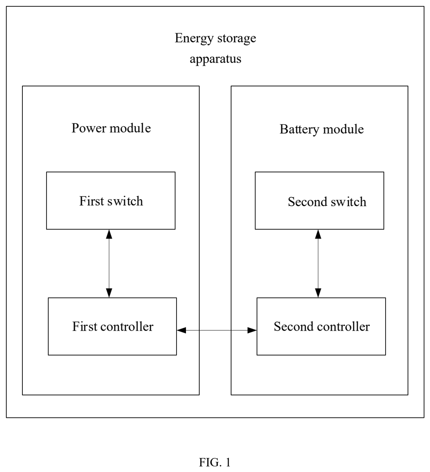

First, the energy storage apparatus provided in an embodiment of the present application is introduced. Referring to FIG. 1, a schematic diagram of a structure of the energy storage apparatus provided in an embodiment of the present application is shown. As an example and not a limitation, as shown in FIG. 1, the energy storage apparatus includes a power module and a battery module. The power module is configured to charge the battery module to provide electrical energy to the battery module, thereby converting part of the grid electrical energy into electrical energy in the battery module; during peak electricity consumption or when the external grid power supply is interrupted, the power module can receive electrical energy released by the battery module and convert it to the AC grid to compensate for grid electrical energy.

The power module includes a first switch and a first controller configured to control the first switch, and the battery module includes a second switch and a second controller configured to control the second switch. The first controller is connected to both the first switch and the second controller, and the second controller is connected to the second switch.

Exemplarily, the first switch is a bypass switch, and the first controller is a power sub-module controller (Sub-module management controller, SMC); the second switch is a busbar switch, and the second controller is a battery management controller (Battery management controller, BMC). The SMC is connected to both the bypass switch and the BMC and the BMC is connected to the busbar switch. When the bypass switch is closed, the power module is in a short-circuit state; when the busbar switch is closed and the bypass switch is open, the battery module is in a charging/discharging state.

It should be noted that, for ease of description, in the following embodiments of the present application, the first controller is exemplified as an SMC, and the second controller is exemplified as a BMC. In practical applications, the first controller and the second controller may also be other controllers capable of information transmission and issuing control instructions, and embodiments of the present application do not specifically limit the names and models of the first controller, the second controller, and the third controller.

In an embodiment of the present application, the first controller is connected to the second controller, enabling the first controller to acquire a state of the second switch detected by the second controller and control the second switch, and enabling the second controller to acquire a state of the first switch detected by the first controller and control the first switch, thereby achieving redundant control of the first switch and the second switch by the first controller and the second controller, effectively improving communication reliability of the energy storage system, and thus enhancing the operational reliability and stability of the energy storage system.

In some embodiments, the first controller is further connected to the second switch.

In an embodiment of the present application, the first controller can directly acquire the state of the second switch and directly control the second switch without relying on the second controller to acquire the state of the second switch. In cases where the second controller fails or the connection between the second controller and the second switch is interrupted, the first controller can acquire the state of the second switch and control the second switch, thereby improving communication reliability of the energy storage system.

In some embodiments, the second controller is further connected to the first switch.

In an embodiment of the present application, the second controller can directly acquire the state of the first switch and directly control the first switch without relying on the first controller to acquire the state of the first switch. In cases where the first controller fails or the connection between the first controller and the first switch is interrupted, the second controller can acquire the state of the first switch and control the first switch, thereby improving communication reliability of the energy storage system.

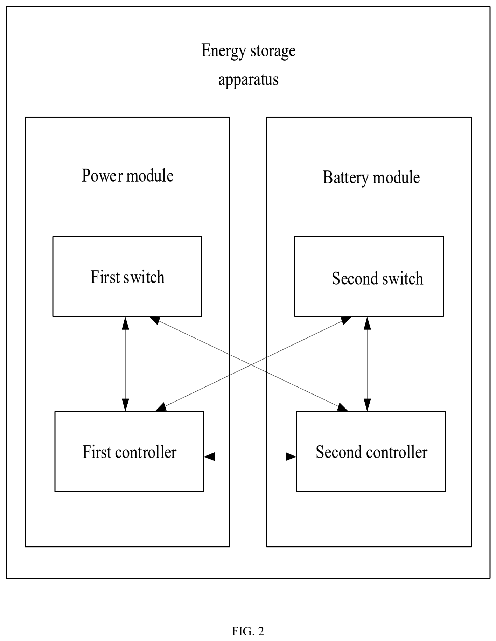

Exemplarily, referring to FIG. 2, a schematic diagram of a structure of an energy storage apparatus provided in another embodiment of the present application is shown. Compared to FIG. 1, the energy storage apparatus shown in FIG. 2 adds a connection route between the first controller and the second switch and a connection route between the second controller and the first switch. In cases of a communication failure between the first controller and the first switch, the second controller can still acquire the state of the first switch; in cases of a communication failure between the second controller and the second switch, the first controller can still acquire the state of the second switch. The energy storage apparatus shown in the embodiment of FIG. 2, through cross-control of the first switch and the second switch by the first controller and the second controller, can improve the success rate of communication, thereby enhancing the operational reliability and stability of the energy storage system.

In some embodiments, the first controller is connected to both the first switch and the second switch via multi-channel communication routes. The second controller is connected to both the first switch and the second switch via multi-channel communication routes.

Multi-channel communication refers to a communication method that establishes two or more independent transmission channels using a common channel. Since a multi-channel communication route includes multiple independent transmission channels, when one or several transmission channels fail, other independent transmission channels can still transmit signals normally. Therefore, compared to single-channel communication, multi-channel communication offers higher communication reliability.

Optionally, the multi-channel communication route is a dual-channel optical fiber.

Optical fiber, short for optical waveguide fiber, is a fiber made of glass or plastic that can serve as a light transmission tool. Optical fiber transmission has advantages such as wide bandwidth, low loss, and strong anti-interference capability. Therefore, using dual-channel optical fibers as transmission channels between the controller and the switches can enhance communication reliability and stability while reducing communication costs.

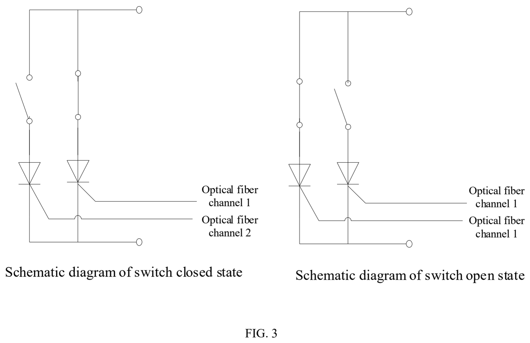

Referring to FIG. 3, a schematic diagram of a dual-channel optical fiber provided in an embodiment of the present application is shown. As shown in FIG. 3, a dual-channel optical fiber includes optical fiber channel 1 and optical fiber channel 2. The left diagram in FIG. 3 represents a switch closed state, where the two optical fibers output 1 and 0, respectively. Optical fiber channel 1 is closed, indicating the presence of light, corresponding to an output signal of 1; optical fiber channel 2 is open, indicating no light, corresponding to an output signal of 0. The right diagram in FIG. 3 represents a switch open state, where the two optical fibers output 0 and 1, respectively. Optical fiber channel 1 is open, indicating no light, corresponding to an output signal of 0; optical fiber channel 2 is closed, indicating the presence of light, corresponding to an output signal of 1. When the optical fiber with light fails (outputting 0), the output signal is 00; when the optical fiber without light fails (outputting 1), the output signal is 11. That is, when the output signal is 00 or 11, it indicates a dual-bit error, meaning both optical fiber channels are simultaneously open or closed, indicating an abnormal signal.

Since the output of a single-channel optical fiber is only 0 or 1, it is impossible to determine whether the signal is abnormal. Therefore, compared to a single-channel optical fiber, using a dual-channel optical fiber to detect a switch state facilitates identifying an abnormal signal state, thereby improving the reliability of switch state detection.

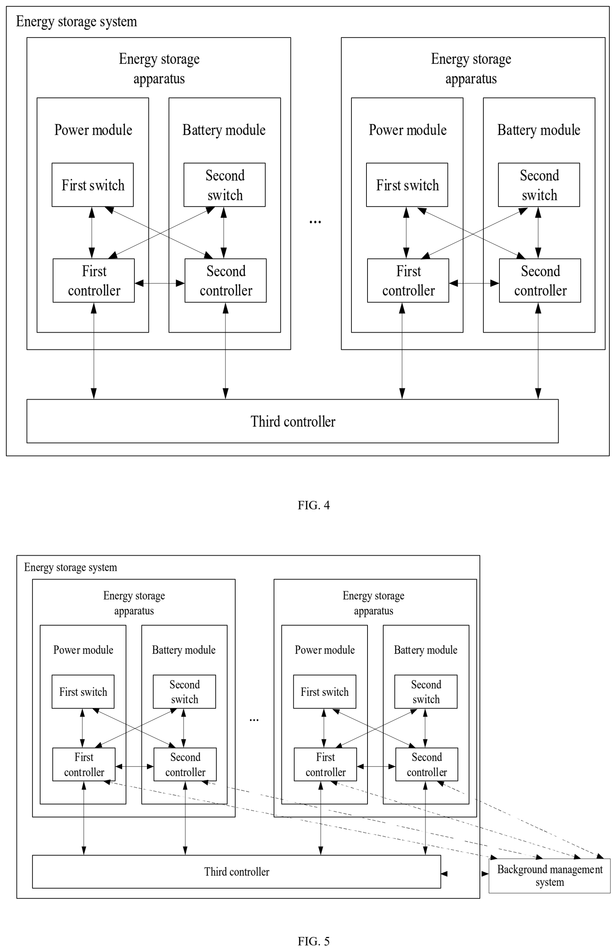

Based on the above energy storage apparatus, an embodiment of the present application provides an energy storage system. Referring to FIG. 4, a schematic diagram of an energy storage system provided in an embodiment of the present application is shown. As an example and not a limitation, as shown in FIG. 4, the energy storage system includes a third controller and at least one energy storage apparatus as described in the embodiments of FIG. 1 or FIG. 2. The third controller is connected to the first controller in the energy storage apparatus.

Exemplarily, the third controller is a valve base controller (Valve base controller, VBC). In some application scenarios, the SMC in each energy storage apparatus detects the state of the bypass switch and reports it to the VBC; the BMC detects the state of the busbar switch and reports it to the VBC via the SMC; the VBC generates control instructions based on the received states and sends them to the SMC; the SMC controls the bypass switch to close/open based on the control instructions and transmits the control instructions to the BMC; and the BMC controls the busbar switch to close/open based on the received control instructions.

The energy storage system in an embodiment of the present application achieves redundant control of the first switch and the second switch by the first controller and the second controller, effectively improving communication reliability of the energy storage system, and thus enhancing the operational reliability and stability of the energy storage system.

In some embodiments, the third controller is further connected to the second controller in the energy storage apparatus.

In an embodiment of the present application, redundant control of the first controller and the second controller by the third controller is achieved. Specifically, the second controller can not only report switch states to the third controller via the first controller but also directly report switch states to the third controller. The third controller can send control instructions to the second controller via the first controller or directly to the second controller. In cases of a communication failure between the first controller and the third controller or between the first controller and the second controller, the third controller can still acquire switch information via the second controller and control the switch to close/open via the second controller; in cases of a communication failure between the second controller and the third controller or between the first controller and the second controller, the third controller can still acquire switch information via the first controller and control the switch to close/open via the first controller. Through redundant control of the first controller and the second controller by the third controller, the success rate of communication can be further improved, thereby further enhancing the operational reliability and stability of the energy storage system.

In some embodiments, the energy storage system further includes a background management system. The background management system is connected to the third controller.

In some application scenarios, when the energy storage system includes multiple VBCs, the background management system is communicatively connected to each VBC. During the control process, the SMC and BMC report switch states to the VBC, and the VBC reports the switch states to the background management system; the background management system sends control instructions to the VBC based on the switch states; the VBC then sends the control instructions to the SMC and BMC; and the SMC and BMC control the corresponding switches to close/open based on the control instructions.

It can be understood that the background management system acts as the "brain" of the energy storage system. The background management system manages and controls each energy storage apparatus in the energy storage system through the VBC. In some application scenarios, the VBC can also manage and control the energy storage system. However, energy storage systems are typically large, and VBCs often cannot handle such extensive management tasks. Managing the energy storage system by the background management system facilitates ensuring reliable operation of the energy storage system and improving management efficiency.

In some embodiments, the background management system is connected to the first controller in the energy storage apparatus or to the second controller in the energy storage apparatus.

In one implementation, the background management system is connected to the first controller but not to the second controller.

In another implementation, the background management system is connected to the second controller but not to the first controller.

In a third implementation, the background management system is connected to both the first controller and the second controller.

Exemplarily, referring to FIG. 5, a schematic diagram of an energy storage system provided in another embodiment of the present application is shown. In the energy storage system shown in FIG. 5, the first controller and the second controller can not only report switch states to the background management system via the third controller but also directly report switch states to the background management system; similarly, the background management system can not only send control instructions to the first controller and the second controller via the third controller but also directly send control instructions to the first controller and the second controller. In cases of a communication failure between the first controller and the second controller, between the second controller and the third controller, or between the third controller and the background management system, the background management system can still communicate directly with the first controller and the second controller, acquire switch information via the first controller and the second controller, and control the switches to close/open via the first controller and the second controller. The energy storage apparatus shown in the embodiment of FIG. 5, through redundant control of the first controller and the second controller in each energy storage apparatus by the background management system, can further improve the success rate of communication, thereby further enhancing the operational reliability and stability of the energy storage system.

In some embodiments, the first controllers in any two energy storage apparatuses in the energy storage system are connected.

**In** this way, redundant control between energy storage apparatuses is achieved. Exemplarily, the SMC of energy storage apparatus 1 is communicatively connected to the SMC of energy storage apparatus 2. In cases of a communication failure between the SMC of energy storage apparatus 1 and the VBC, the SMC of energy storage apparatus 2 can acquire the switch state of energy storage apparatus 1 and upload the switch state to the VBC; similarly, the VBC can send control instructions for energy storage apparatus 1 to the SMC of energy storage apparatus 1 via the SMC of energy storage apparatus 2, thereby achieving switch control of energy storage apparatus 1. Through redundant control between the energy storage apparatuses, the success rate of communication can be further improved, thereby further enhancing the operational reliability and stability of the energy storage system.

Optionally, in practical applications, to improve communication efficiency and reduce communication failure rates, the SMCs in two adjacent energy storage apparatuses in the energy storage system can be communicatively connected.

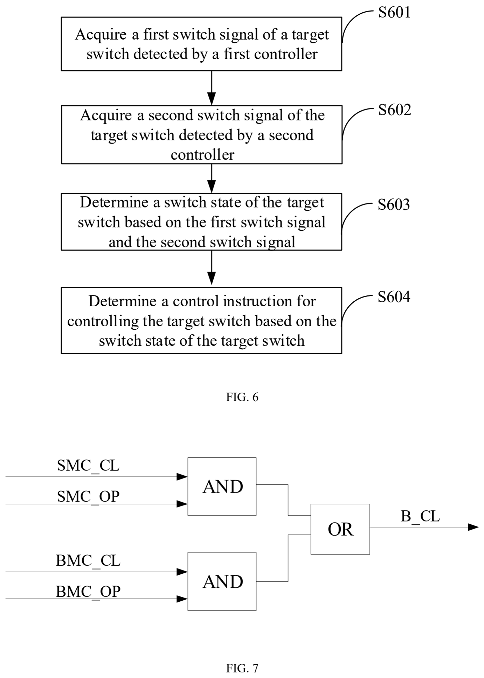

Based on the energy storage system provided in the above embodiments, an embodiment of the present application provides a redundant control method. Referring to FIG. 6, a flowchart schematic diagram of a redundant control method provided in an embodiment of the present application is shown. As an example and not a limitation, as shown in FIG. 6, the redundant control method includes the following steps:
Step S601: Acquire a first switch signal of a target switch detected by the first controller.
Step S602: Acquire a second switch signal of the target switch detected by the second controller.
Step S603: Determine a switch state of the target switch based on the first switch signal and the second switch signal.
Step S604: Determine a control instruction for controlling the target switch based on the switch state of the target switch.

In an embodiment, the execution subject of the above method may be the first controller, and the target switch is the first switch. Steps S601-S604 specifically include: The first controller detects a first switch signal of the first switch, and the second controller detects a second switch signal of the first switch; the second controller sends the second switch signal of the first switch to the first controller; and the first controller determines the switch state of the first switch based on the first switch signal and the second switch signal of the first switch and determines a control instruction for the target switch based on the switch state of the first switch.

In an embodiment, the execution subject of the above method may be the first controller, and the target switch is the second switch. Steps S601-S604 specifically include: The first controller detects a first switch signal of the second switch, and the second controller detects a second switch signal of the second switch; the second controller sends the second switch signal of the second switch to the first controller; and the first controller determines the switch state of the second switch based on the first switch signal and the second switch signal of the bypass switch and determines a control instruction for the second switch based on the switch state of the second switch.

In an embodiment, the execution subject of the above method may be the second controller, and the target switch is the first switch. Steps S601-S604 specifically include: The first controller detects a first switch signal of the first switch and sends the first state information of the first switch to the second controller; the second controller detects a second switch signal of the first switch and determines the switch state of the first switch based on the first switch signal and the second switch signal of the first switch, and then determines a control instruction for the first switch based on the switch state of the first switch.

In an embodiment, the execution subject of the above method may be the second controller, and the target switch is the second switch. Steps S601-S604 specifically include: The first controller detects a first switch signal of the second switch and sends the first switch signal of the second switch to the second controller; the second controller detects a second switch signal of the second switch and determines the switch state of the second switch based on the first switch signal and the second switch signal of the second switch, and then determines a control instruction for the second switch based on the switch state of the second switch.

In some embodiments, Step S604 may also be executed by the third controller. Exemplarily, when the execution subject of Steps S601-S603 is the first controller, the first controller uploads the switch state of the target switch to the third controller, and the third controller determines a control instruction for controlling the target switch based on the switch state of the target switch.

In the redundant control method provided in an embodiment of the present application, the first switch signal of the target switch detected by the first controller and the second switch signal of the target switch detected by the second controller serve as redundant information of each other, and the switch state of the target switch is determined using the first switch signal and the second switch signal. Through the above method, in cases of a communication failure of the first controller or the second controller, the final switch state can be determined based on the redundant information, effectively improving the reliability of the detection results, thereby enhancing the operational reliability and stability of the energy storage system.

Optionally, one implementation of Step S603 is: when the first switch signal and the second switch signal are consistent, determine the first switch signal or the second switch signal as the switch state of the target switch. When the first switch signal and the second switch signal are inconsistent, determine a preset state as the switch state of the target switch.

The preset state may be a pre-specified state value. For example, the preset state is 00. When the first switch signal and the second switch signal are inconsistent, 00 is determined as the switch state of the target switch. Since 00 is an abnormal state, when the first switch signal and the second switch signal are inconsistent, it is equivalent to determining the switch state of the target switch as an abnormal state. Alternatively, the first switch signal or the second switch signal may be pre-specified as the preset state. For example, if the first switch signal is pre-specified as the preset state, when the first switch signal and the second switch signal are inconsistent, the first switch signal is determined as the switch state of the target switch regardless of their values.

The above implementation has simple logic and is easy to implement, but it has the following issues: when the first switch signal and the second switch signal are consistent and both are abnormal information, the determined switch state of the target switch is also abnormal information; when the first switch signal and the second switch signal are inconsistent, since it is unknown which state is abnormal, the determined switch state of the target switch may also be abnormal information. Thus, through the above method, a normal switch state cannot be detected, requiring further manual detection, which is time-consuming and labor-intensive, resulting in low detection efficiency.

To address the above issues, in an embodiment, before the determining a switch state of the target switch based on the first switch signal and the second switch signal, the redundant control method further includes:
in a case that the first switch signal and/or the second switch signal is abnormal, determining the switch state of the target switch as a preset state; and
in a case that both the first switch signal and the second switch signal are normal, performing the step of determining a switch state of the target switch based on the first switch signal and the second switch signal.

The cases where the first switch signal and/or the second switch signal is abnormal include the following: a first case, the first switch signal is abnormal, and the second switch signal is normal; a second case, the first switch signal is normal, and the second switch signal is abnormal; and a third case, both the first switch signal and the second switch signal are abnormal.

In an embodiment, the determining the switch state of the target switch as a preset state includes:
in a case that the target switch is the first switch, determining the switch state of the target switch as an open state; and
in a case that the target switch is the second switch, determining the switch state of the target switch as a closed state.

In the above implementation, anomaly detection is first performed on the first switch signal and the second switch signal, and the switch state of the target switch is determined based on the anomaly detection results; in a case that both the first switch signal and the second switch signal are normal, the first switch signal and the second switch signal are identical information, and either can be determined as the switch state of the target switch; and in a case that the first switch signal and/or the second switch signal is abnormal, the state of different switches is determined according to different preset settings. Through the above method, whether the first switch signal and the second switch signal are normal or not, a normal switch state can be detected, improving detection efficiency and reliability.

In an embodiment, the determining a switch state of the target switch based on the first switch signal and the second switch signal includes:
performing a logical calculation based on the first switch signal and the second switch signal to obtain a calculation result; and determining the switch state of the target switch based on the calculation result.

Optionally, the logical calculation can be implemented through a software program or through a hardware logic circuit. Compared to software implementation, hardware logic circuits offer higher reliability and stability, which is more beneficial to the stability of the energy storage system.

In an embodiment, in a case that the multi-channel communication route is a dual-channel optical fiber, the performing a logical calculation based on the first switch signal and the second switch signal to obtain a calculation result includes:
performing an AND operation on two first signal values included in the first switch signal to obtain a first logical signal; performing an AND operation on two second signal values included in the second switch signal to obtain a second logical signal; and performing an OR operation on the first logical signal and the second logical signal to obtain the calculation result.

The first signal values are signal values of the dual-channel optical fiber between the first controller and the target switch, and the second signal values are signal values of the dual-channel optical fiber between the second controller and the target switch.

Taking the dual-channel optical fiber shown in FIG. 4 as an example, assuming the target switch is the first switch, in a case that the first switch is in an open state and both the first controller and the second controller communicate normally (both optical fiber channel signals are normal), the first switch signal is 01 (optical fiber channel 1 is open, and optical fiber channel 2 is closed), and the second switch signal is 01. In a case that the first switch is in an open state, the first controller communicates normally, but the second controller has a communication failure, the first switch signal is 01, and the second switch signal is 00 (optical fiber channel 2 is abnormal) or 11 (optical fiber channel 1 is abnormal). In a case that the first switch is in an open state, the first controller has a communication failure, and the second controller communicates normally, the first switch signal is 00 or 11, and the second switch signal is 01.

In a case that the first switch is in a closed state and both the first controller and the second controller communicate normally, the first switch signal is 10 (optical fiber channel 1 is closed, and optical fiber channel 2 is open), and the second switch signal is also 10. In a case that the first switch is in a closed state, the first controller communicates normally, but the second controller has a communication failure, the first switch signal is 10, and the second switch signal is 00 or 11. In a case that the first switch is in a closed state, the first controller has a communication failure, and the second controller communicates normally, the first switch signal is 00 or 11, and the second switch signal is 10.

The above method can be implemented through a logic circuit. Referring to FIG. 7, a schematic diagram of a logic circuit provided in an embodiment of the present application is shown. As shown in FIG. 7, the two first signal values are SMC_CL and SMC_OP, respectively, and the two second signal values are BMC_CL and BMC_OP, respectively. "AND" represents an AND gate, and "OR" represents an OR gate. B_CL represents the switch state of the target switch.

It should be noted that the above is only an example for dual-channel optical fiber communication. When multi-channel communication routes are used, the calculation logic changes accordingly, and embodiments of the present application do not specifically limit the specific calculation logic. In practical applications, an AND operation can be implemented with a single AND gate device or with a combination of several devices. Similarly, an OR operation can be implemented with a single OR gate device or with a combination of several devices.

In an embodiment of the present application, through simple AND and OR operations on the first switch signal and the second switch signal, the switch state of the target switch can be determined, greatly improving the efficiency of determining the switch state of the target switch, facilitating timely control during system failures.

In an embodiment, in a case that the multi-channel communication route is a dual-channel optical fiber, the performing a logical calculation based on the first switch signal and the second switch signal to obtain a calculation result includes:
performing an AND operation on a first first signal value and an inverted value of a second first signal value to obtain a first calculated value in the first logical signal;
performing an AND operation on an inverted value of the first first signal value and the second first signal value to obtain a second calculated value in the first logical signal;
performing an AND operation on a first second signal value and an inverted value of a second second signal value to obtain a third calculated value in the second logical signal;
performing an AND operation on an inverted value of the first second signal value and the second second signal value to obtain a fourth calculated value in the second logical signal;
performing an OR operation on the first calculated value and the third calculated value to obtain a fifth calculated value in the calculation result;
performing an OR operation on the second calculated value and the fourth calculated value to obtain a sixth calculated value in the calculation result; and
determining the switch state of the target switch based on the fifth calculated value and the sixth calculated value.

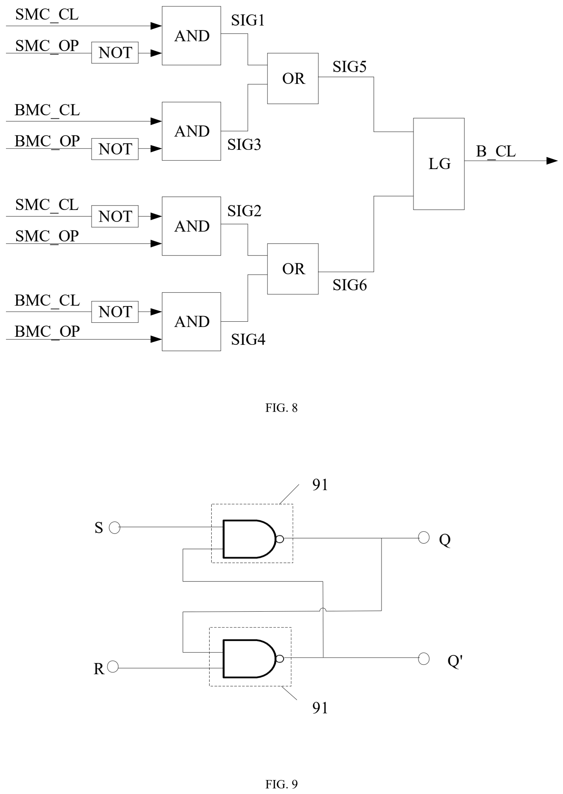

The above method can also be implemented through a logic circuit. Referring to FIG. 8, a schematic diagram of a logic circuit provided in another embodiment of the present application is shown. As shown in FIG. 8, SIG1 represents the first calculated value, SIG2 represents the second calculated value, SIG3 represents the third calculated value, SIG4 represents the fourth calculated value, SIG5 represents the fifth calculated value, SIG6 represents the sixth calculated value, "LG" represents logical operation, and B_CL represents the switch state of the target switch.

In an embodiment of the present application, LG is used to implement the process of determining the switch state of the target switch based on the fifth calculated value and the sixth calculated value. Specifically, LG can determine the switch state of the target switch based on different cases of the fifth calculated value and the sixth calculated value, for example, determining the switch state according to different preset settings for different switches when the first switch signal and/or the second switch signal is abnormal.

In a case of a dual-bit error in the dual-channel optical fiber corresponding to the first controller, the two first signal values are the same, and the obtained first calculated value and second calculated value are both 0; in a case that the dual-channel optical fiber corresponding to the first controller is normal, the two first signal values are different, and the obtained first calculated value and second calculated value are 1. The principle for the dual-channel optical fiber corresponding to the second controller is the same. Therefore, through the above logic circuit, based on the first calculated value, the second calculated value, the third calculated value, and the fourth calculated value, it can be determined whether the dual-channel optical fibers are faulty, equivalent to performing anomaly detection on the first switch signal and the second switch signal, enabling detection of the faulty communication line and thereby determining the normal switch state.

In an embodiment, the determining the switch state of the target switch based on the fifth calculated value and the sixth calculated value includes:
performing a calculation based on the fifth calculated value and the sixth calculated value using a preset trigger to obtain the switch state of the target switch.

Optionally, the preset trigger is an RS trigger.

The RS trigger includes an R input terminal and an S input terminal, and includes a Q output terminal and a Q' output terminal, where Q' is obtained by inverting Q. Referring to FIG. 9, a schematic diagram of an RS trigger provided in an embodiment of the present application is shown. As shown in FIG. 9, the RS trigger includes two NAND gates 91. The logic of the RS trigger is: when S=1 and R=0, the SR trigger is set, Q=1, and Q'=0; when S=0 and R=1, the SR trigger is reset, Q=0, and Q'=1; when S=1 and R=1, Q=0, and Q'=1, maintaining the previous state; and when S=0 and R=0, the SR trigger is in an indeterminate state.

In practical applications, in a case of a dual-bit error in the dual-channel optical fibers, the bypass switch is determined to be open, and the busbar switch is determined to be closed. This avoids misjudgment of a short-circuited power module or an offline battery module due to communication failures. To achieve this effect, in an embodiment, when the target switch is the bypass switch, the RS trigger adopts R priority (reset priority); and when the target switch is the busbar switch, the RS trigger adopts S priority (set priority).

It can be understood that the above is only one implementation of LG. In practical applications, other logic devices with similar functions or logic circuits composed of multiple devices capable of achieving similar functions can also be used. For example, the above RS trigger can also be composed of two NOR gates. Alternatively, LG can be implemented through a JK trigger. LG can also be implemented through software, that is, by a processor with logical operation functions, by compiling the logic code in the processor. The present application does not specifically limit the implementation of LG.

In practical applications, communication delays may occur, that is, the time when the fifth signal value is input to the RS trigger and the time when the sixth signal value is input to the RS trigger are not synchronized, which may lead to incorrect third state information output by the RS trigger.

To address the above issue, in an embodiment, the performing a calculation based on the fifth calculated value and the sixth calculated value using a preset trigger to obtain the switch state of the target switch includes:
performing delay processing on both the fifth calculated value and the sixth calculated value and;
performing a calculation based on the delay-processed fifth calculated value and the delay-processed sixth calculated value using the preset trigger to obtain the switch state of the target switch.

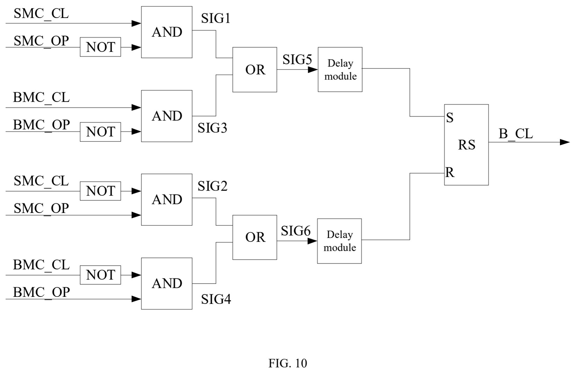

Referring to FIG. 10, a schematic diagram of a logic circuit provided in another embodiment of the present application is shown. As shown in FIG. 10, a delay module is added after each of the two OR gates.

By adding delay processing, it can be ensured that the fifth calculated value and the sixth calculated value are synchronously input to the RS trigger, effectively avoiding the issue of asynchronous input times of the fifth calculated value and the sixth calculated value to the RS trigger, thereby effectively improving the detection reliability of the third state information.

It should be understood that the sequence numbers of the steps in the above embodiments do not imply the order of execution, and the execution order of each process should be determined by its function and internal logic, and should not constitute any limitation on the implementation process of the embodiments of the present application.

An embodiment of the present application also provides a computer-readable storage medium, the computer-readable storage medium storing a computer program, which, when executed by a processor, can implement the steps in the embodiments of the redundant control method described above.

It can be understood that the above computer-readable storage medium can be provided in both the first controller and the second controller, so that both the first controller and the second controller can achieve redundant control through the above redundant control method.

An embodiment of the present application provides a computer program product, which, when run on a terminal device, enables the terminal device to execute the steps in the embodiments of the redundant control method described above.

It can be understood that the above computer program product can be deployed in both the first controller and the second controller, so that both the first controller and the second controller can achieve redundant control through the above redundant control method.

If the integrated unit is implemented in the form of a software functional unit and sold or used as an independent product, it can be stored in a computer-readable storage medium. Based on this understanding, all or part of the processes in the methods of the above embodiments of the present application can be implemented by instructing relevant hardware through a computer program, the computer program can be stored in a computer-readable storage medium, and when executed by a processor, the computer program can implement the steps of the various method embodiments described above. The computer program includes computer program code, which may be in source code form, object code form, executable file, or some intermediate form, and the like. The computer-readable medium may include at least: any entity or device capable of carrying the computer program code to a device/terminal equipment, recording medium, computer memory, read-only memory (ROM, Read-Only Memory), random access memory (RAM, Random Access Memory), electrical carrier signals, telecommunication signals, and software distribution media. For example, USB flash drives, mobile hard drives, magnetic disks, or optical disks. In some jurisdictions, according to legislation and patent practice, computer-readable media may not include electrical carrier signals and telecommunication signals.

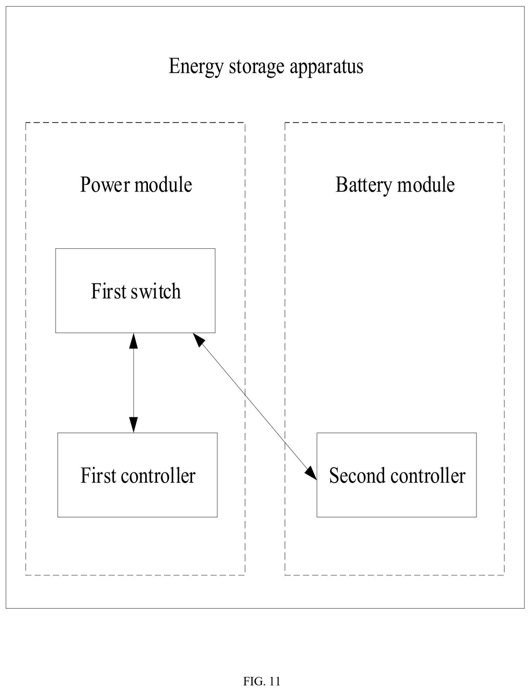

Referring to FIG. 11, a schematic diagram of a structure of an energy storage apparatus provided in an embodiment of the present application is shown. As an example and not a limitation, the energy storage apparatus includes a power module and a battery module.

The power module includes a first switch and a first controller configured to control the first switch, and the battery module includes a second controller. The second controller is connected to the first switch.

Exemplarily, the first switch is a bypass switch, and the first controller is a power sub-module controller (Sub-module management controller, SMC); and the second controller is a battery management controller (Battery management controller, BMC). The bypass switch is connected to both the SMC and the BMC.

It should be noted that, for ease of description, in the following embodiments of the present application, the first controller is exemplified as an SMC, and the second controller is exemplified as a BMC. In practical applications, the first controller and the second controller may also be other controllers capable of information transmission and issuing control instructions, and embodiments of the present application do not specifically limit the names and models of the first controller, the second controller, and the third controller.

In an embodiment of the present application, the first switch is connected to both the first controller and the second controller enabling the first controller and the second controller to acquire the state of the first switch and control the first switch, thereby achieving redundant control of the first switch by the first controller and the second controller, effectively improving communication reliability of the energy storage system, and thus enhancing the operational reliability and stability of the energy storage system.

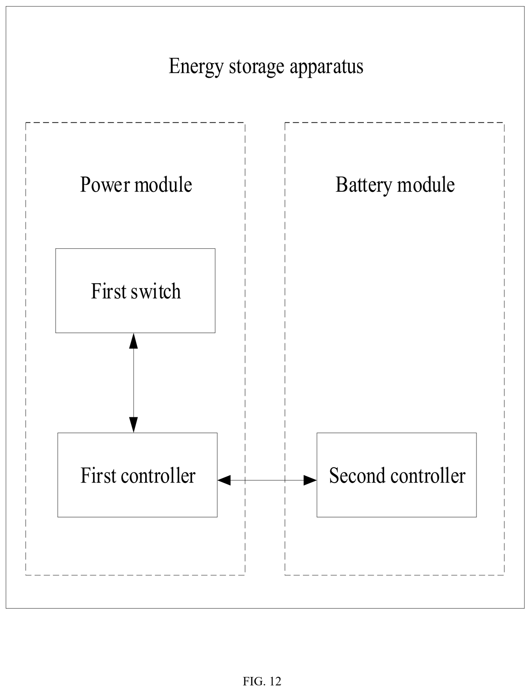

In some embodiments, as shown in FIG. 12, the second controller is connected to the first switch via the first controller.

In an embodiment of the present application, the second controller acquires the state of the first switch and controls the first switch via the first controller. Data or instructions of the first controller and the second controller can be backed up, thereby improving communication reliability of the energy storage system.

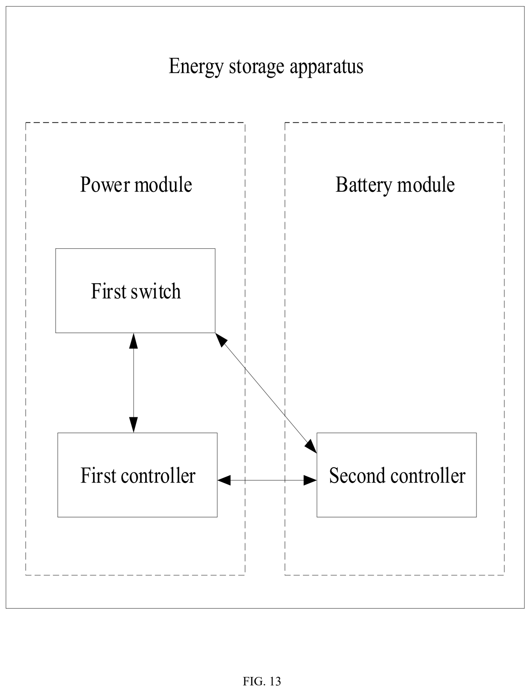

In some embodiments, as shown in FIG. 13, the second controller is connected to the first switch via the first controller and is also directly connected to the first switch.

In an embodiment of the present application, the second controller is connected to the first switch in two ways, and when one communication path fails, the other communication path can ensure smooth communication of data or control instructions between the second controller and the first switch, thereby improving communication reliability of the energy storage system.

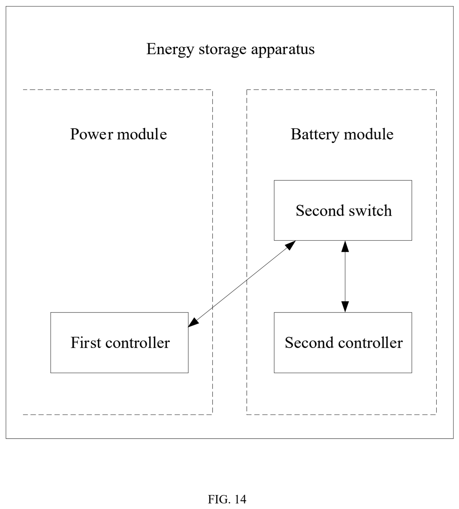

Referring to FIG. 14, a schematic diagram of a structure of an energy storage apparatus provided in an embodiment of the present application is shown. As an example and not a limitation, the energy storage apparatus includes a power module and a battery module.

The power module includes a first controller, and the battery module includes a second switch and a second controller configured to control the second switch. The first controller is connected to the second switch.

Exemplarily, the second switch is a busbar switch, and the first controller is a power sub-module controller (Sub-module management controller, SMC); and the second controller is a battery management controller (Battery management controller, BMC). The busbar switch is connected to both the SMC and the BMC.

It should be noted that, for ease of description, in the following embodiments of the present application, the first controller is exemplified as an SMC, and the second controller is exemplified as a BMC. In practical applications, the first controller and the second controller may also be other controllers capable of information transmission and issuing control instructions, and embodiments of the present application do not specifically limit the names and models of the first controller, the second controller, and the third controller.

In an embodiment of the present application, the second switch is connected to both the first controller and the second controller enabling the first controller and the second controller to acquire the state of the second switch and control the second switch, thereby achieving redundant control of the second switch by the first controller and the second controller, effectively improving communication reliability of the energy storage system, and thus enhancing the operational reliability and stability of the energy storage system.

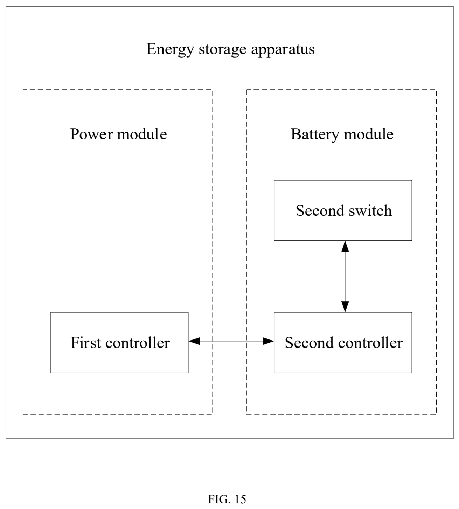

In some embodiments, as shown in FIG. 15, the first controller is connected to the second switch via the second controller.

In an embodiment of the present application, the first controller acquires the state of the second switch and controls the second switch via the second controller. Data or instructions of the second controller and the first controller can be backed up, thereby improving communication reliability of the energy storage system.

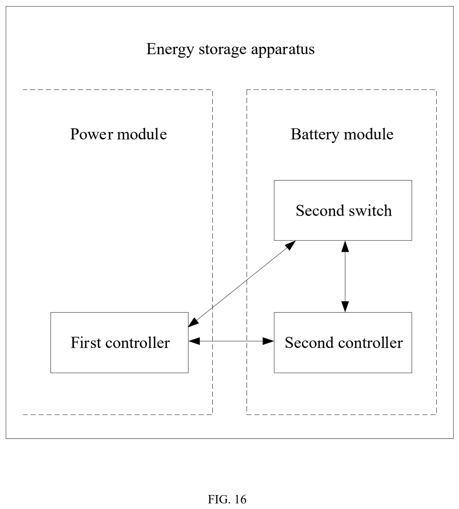

In some embodiments, as shown in FIG. 16, the first controller is connected to the second switch via the second controller and is also directly connected to the second switch.

In an embodiment of the present application, the first controller is connected to the second switch in two ways, and when one communication path fails, the other communication path can ensure smooth communication of data or control instructions between the first controller and the second switch, thereby improving communication reliability of the energy storage system.

In the above embodiments, the descriptions of each embodiment have their own emphases, and for parts not detailed or recorded in a certain embodiment, reference may be made to the relevant descriptions of other embodiments.

Those of ordinary skill in the art can realize that the units and algorithm steps of each example described in connection with the embodiments disclosed herein can be implemented by electronic hardware or a combination of computer software and electronic hardware. Whether these functions are executed by hardware or software depends on the particular applications and design constraints of the technical solutions. Persons skilled in the art can employ different methods to implement the described functions for each particular application, but such implementations shall not be construed as going beyond the scope of this application.

The embodiments described above are only used to illustrate the technical solutions of the present application, rather than to limit them; although the present application has been described in detail with reference to the foregoing embodiments, those of ordinary skill in the art should understand that they can still modify the technical solutions recorded in the foregoing embodiments or make equivalent replacements for some technical features; and these modifications or replacements do not make the essence of the corresponding technical solutions depart from the spirit and scope of the technical solutions of the embodiments of the present application, and should be included within the protection scope of the present application.

## Claims

1. An energy storage apparatus **characterized by** comprising a power module and a battery module; wherein
the power module comprises a first switch and a first controller configured to control the first switch; and
the battery module comprises a second switch and a second controller configured to control the second switch; wherein
the first controller is connected to both the first switch and the second controller, and the second controller is connected to the second switch.

2. The energy storage apparatus according to claim 1, **characterized in that** the first controller is further connected to the second switch.

3. The energy storage apparatus according to claim 2, **characterized in that** the first controller is connected to both the first switch and the second switch via multi-channel communication routes.

4. The energy storage apparatus according to any one of claims 1 to 3, **characterized in that** the second controller is further connected to the first switch.

5. The energy storage apparatus according to claim 4, **characterized in that** the second controller is connected to both the first switch and the second switch via multi-channel communication routes.

6. The energy storage apparatus according to claim 3 or 5, **characterized in that** the multi-channel communication route is a dual-channel optical fiber.

7. An energy storage system **characterized by** comprising a third controller and at least one energy storage apparatus according to any one of claims 1 to 6; wherein
the third controller is connected to the first controller in the energy storage apparatus.

8. The energy storage system according to claim 7, **characterized in that** the third controller is further connected to the second controller in the energy storage apparatus.

9. The energy storage system according to claim 7 or 8, **characterized in that** the energy storage system further comprises a background management system; wherein
the background management system is connected to the third controller.

10. The energy storage system according to claim 9, **characterized in that** the background management system is connected to the first controller in the energy storage apparatus or to the second controller in the energy storage apparatus.

11. The energy storage system according to any one of claims 7 to 10, **characterized in that** the first controllers in any two energy storage apparatuses in the energy storage system are connected.

12. A redundant control method applied to the energy storage system according to any one of claims 7 to 11, **characterized by** comprising:
acquiring a first switch signal of a target switch detected by the first controller;
acquiring a second switch signal of the target switch detected by the second controller;
determining a switch state of the target switch based on the first switch signal and the second switch signal; and
determining a control instruction for controlling the target switch based on the switch state of the target switch.

13. The redundant control method according to claim 12, **characterized in that**, before the determining a switch state of the target switch based on the first switch signal and the second switch signal, the method further comprises:
in a case that the first switch signal and/or the second switch signal is abnormal, determining the switch state of the target switch as a preset state; and
in a case that both the first switch signal and the second switch signal are normal, performing the step of determining a switch state of the target switch based on the first switch signal and the second switch signal.

14. The redundant control method according to claim 13, **characterized in that** the determining the switch state of the target switch as a preset state comprises:
in a case that the target switch is the first switch, determining the switch state of the target switch as an open state; and
in a case that the target switch is the second switch, determining the switch state of the target switch as a closed state.

15. The redundant control method according to claim 12, **characterized in that** the determining a switch state of the target switch based on the first switch signal and the second switch signal comprises:
performing a logical calculation based on the first switch signal and the second switch signal to obtain a calculation result; and
determining the switch state of the target switch based on the calculation result.

16. The redundant control method according to claim 15, **characterized in that** the performing a logical calculation based on the first switch signal and the second switch signal to obtain a calculation result comprises:
in a case that the multi-channel communication route is a dual-channel optical fiber, performing an AND operation on two first signal values comprised in the first switch signal to obtain a first logical signal;
performing an AND operation on two second signal values comprised in the second switch signal to obtain a second logical signal; and
performing an OR operation on the first logical signal and the second logical signal to obtain the calculation result.

17. The redundant control method according to claim 16, **characterized in that**:
the performing an AND operation on two first signal values comprised in the first switch signal to obtain a first logical signal comprises:
performing an AND operation on a first first signal value and an inverted value of a second first signal value to obtain a first calculated value in the first logical signal; and
performing an AND operation on an inverted value of the first first signal value and the second first signal value to obtain a second calculated value in the first logical signal;
the performing an AND operation on two second signal values comprised in the second switch signal to obtain a second logical signal comprises:
performing an AND operation on a first second signal value and an inverted value of a second second signal value to obtain a third calculated value in the second logical signal; and
performing an AND operation on an inverted value of the first second signal value and the second second signal value to obtain a fourth calculated value in the second logical signal;
the performing an OR operation on the first logical signal and the second logical signal to obtain the calculation result comprises:
performing an OR operation on the first calculated value and the third calculated value to obtain a fifth calculated value in the calculation result; and
performing an OR operation on the second calculated value and the fourth calculated value to obtain a sixth calculated value in the calculation result; and
the performing an OR operation on the first logical signal and the second logical signal to obtain the calculation result comprises:
determining the switch state of the target switch based on the fifth calculated value and the sixth calculated value.

18. The redundant control method according to claim 17, **characterized in that** the determining the switch state of the target switch based on the fifth calculated value and the sixth calculated value comprises:
performing a calculation based on the fifth calculated value and the sixth calculated value using a preset trigger to obtain the switch state of the target switch.

19. The redundant control method according to claim 18, **characterized in that** the performing a calculation based on the fifth calculated value and the sixth calculated value using a preset trigger to obtain the switch state of the target switch comprises:
performing delay processing on both the fifth calculated value and the sixth calculated value; and
performing a calculation based on the delay-processed fifth calculated value and the delay-processed sixth calculated value using the preset trigger to obtain the switch state of the target switch.

20. The redundant control method according to claim 18 or 19, **characterized in that** the preset trigger is an RS trigger.

21. An energy storage apparatus **characterized by** comprising a power module and a battery module; wherein
the power module comprises a first switch and a first controller configured to control the first switch;
the battery module comprises a second controller; and
the second controller is connected to the first switch.

22. The energy storage apparatus according to claim 21, **characterized in that** the second controller is connected to the first switch, comprising the second controller being directly connected to the first switch, and/or the second controller being connected to the first switch via the first controller.

23. An energy storage apparatus **characterized by** comprising a power module and a battery module; wherein
the power module comprises a first controller;
the battery module comprises a second switch and a second controller configured to control the second switch; and
the first controller is connected to the second switch.

24. The energy storage apparatus according to claim 23, **characterized in that** the first controller is connected to the second switch, comprising the first controller being directly connected to the second switch, and/or the first controller being connected to the second switch via the second controller.
